(19) Europäisches Patentamt
European Patent Office
Office européen des brevets

(11) **EP 3 261 438 B1**

(12) **EUROPEAN PATENT SPECIFICATION**

(45) Date of publication and mention of the grant of the patent:
**19.12.2018 Bulletin 2018/51**

(51) Int Cl.:
*A01N 33/04* *(2006.01)*         *A01N 37/40* *(2006.01)*
*A01P 1/00* *(2006.01)*          *A01P 3/00* *(2006.01)*
*A01P 13/00* *(2006.01)*

(21) Application number: **16706754.5**

(22) Date of filing: **19.02.2016**

(86) International application number:
**PCT/US2016/018613**

(87) International publication number:
**WO 2016/137830 (01.09.2016 Gazette 2016/35)**

(54) **SYNERGISTIC ANTIMICROBIAL COMPOSITION**

SYNERGISTISCHE ANTIMIKROBIELLE ZUSAMMENSETZUNG

COMPOSITION ANTIMICROBIENNE SYNERGIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2015 US 201562121943 P**

(43) Date of publication of application:
**03.01.2018 Bulletin 2018/01**

(73) Proprietor: **Dow Global Technologies LLC Midland, MI 48674 (US)**

(72) Inventors:
• **FELDER, Patrick, T.**
  **8810 Horgen (CH)**

• **VILLIGER, Lukas, Thomas, Johannes**
  **8810 Horgen (CH)**
• **YVON, Emmanuelle, Christine**
  **8810 Horgen (CH)**

(74) Representative: **Houghton, Mark Phillip et al Patent Outsourcing Limited 1 King Street Bakewell, Derbyshire DE45 1DZ (GB)**

(56) References cited:
**WO-A2-03/062149      WO-A2-2007/139950 GB-A- 2 354 771**

**Description**

This invention relates to combinations of biocides, the combinations having greater activity than would be observed for the individual antimicrobial compounds.

Use of combinations of at least two antimicrobial compounds can broaden potential markets, reduce use concentrations and costs, and reduce waste. In some cases, commercial antimicrobial compounds cannot provide effective control of microorganisms, even at high use concentrations, due to weak activity against certain types of microorganisms, or relatively slow antimicrobial action, or instability under certain conditions such as high temperature and high pH. Combinations of different antimicrobial compounds are sometimes used to provide overall control of microorganisms or to provide the same level of microbial control at lower use rates in a particular end use environment. Additionally, synergy has been found to be an unpredictable phenomenon. Often like compounds display varying synergistic profiles when combined with a particular active. It may be that no synergy is evidenced or it may be that synergy exists but over a different synergistic range. Because of this observation, it is difficult, if not impossible, to draw conclusions regarding the synergistic profile of one compound based upon the synergistic profile of a like compound. Thus more synergistic combinations and their synergistic ranges must be discovered.

One such example of synergy is found in U.S. Pat. No. 5,385,896. This reference discloses combinations of phosphonium salts and aldehydes, but this reference does not suggest any of the combinations claimed herein. There still exists a need for additional combinations of antimicrobial compounds having enhanced activity to provide effective control of microorganisms. The problem addressed by this invention is to provide such combinations of antimicrobial compounds.

GB 2354771 discloses bactericide combinations in detergents. WO 2007/139950 discloses isothiazolone biocides enhanced by zinc ions. WO 2003/062129 discloses a biocidal composition comprising a triamine and a biocide.

STATEMENT OF THE INVENTION

The present invention is directed to a synergistic antimicrobial composition comprising: (a) an amine, which is N-(3-Aminopropyl)-N-dodecylpropane-1,3-diamine; and (b) dithio-2,2'-bis-benzmethylamide; wherein a weight ratio of the amine to dithio-2,2'-bis-benzmethylamide is from 10:1 to 1:10.

DETAILED DESCRIPTION OF THE INVENTION

As used herein, the following terms have the designated definitions, unless the context clearly indicates otherwise. The term "antimicrobial compound" refers to a compound capable of inhibiting the growth or propagation of microorganisms, and/or killing microorganisms; antimicrobial compounds include bactericides, bacteriostats, bacteriostatics, bacteriostatins, fungicides, fungistats, algaecides and algistats, depending on the dose level applied, system conditions and the level of microbial control desired. The term "microorganism" includes, for example, fungi (such as yeast and mold), bacteria and algae. The following abbreviations are used throughout the specification: ppm = parts per million by weight (weight/weight), mL = milliliter. Unless otherwise specified, temperatures are in degrees centigrade (°C), and references to percentages are by weight (wt. %). Percentages of antimicrobial compounds in the composition of this invention are based on the total weight of active ingredients in the composition, i.e., the antimicrobial compounds themselves, exclusive of any amounts of solvents, carriers, dispersants, stabilizers or other materials which may be present. Lastly, all range value endpoints are inclusive and combinable (e.g. ranges expressed as from 10:1 to 1:10 and alternatively 3:1 and 1:3 may also include, for example 10:3).

As used herein, N-(3-Aminopropyl)-N-dodecylpropane-1,3-diamine ("the amine") corresponds with cas # 2372-82-9 and dithio-2,2'-bis-benzmethylamide or "DTBMA" corresponds with cas # : 2527-58-4.

In some embodiments of the invention, a weight ratio of the amine to dithio-2,2'-bis-benzmethylamide (DTBMA) is from 10:1 to 1:10, or from 9:1 to 1:10, alternatively from 9:1 to 1:9 and further alternatively from 3:1 to 1:3.

In some embodiments of the invention, the antimicrobial combination is useful for inhibiting microbial growth in an aqueous medium for example as an in-can preservative. The composition also is useful for controlling microorganisms in other aqueous media including but not limited to industrial water and water containing/contaminated media, such as cooling water, air washer, heat exchangers, boiler water, pulp and paper mill water, other industrial process water media such as: ballast water, wastewater, metalworking fluids, oil and gas, latex, paint, coatings, adhesives, inks, tape joint compounds, pigment, water-based slurries, personal care and household products such as detergent, filtration systems (including reverse osmosis and ultrafiltration systems), toilet bowel, textiles, leather and leather production system, or a system used therewith.

Typically, the amount of the biocide combinations of the present invention to control the growth of microorganisms is from 10 ppm to 5,000 ppm active ingredient. In some embodiments of the invention, the active ingredients of the composition are present in an amount of at least 20 ppm, alternatively at least 50 ppm, alternatively at least 100 ppm, alternatively at least 150 ppm, alternatively at least 200 ppm. In some embodiments, the active ingredients of the composition are present in an amount of no more than 2,000 ppm, alternatively no more than 1,000 ppm, alternatively no more than 500 ppm, alternatively no more than 400 ppm, alternatively no more than 300 ppm, alternatively no more than 250 ppm, alternatively no more than 200 ppm, alternatively no more than 100 ppm, alternatively no more than 50 ppm. Concentrations mentioned above are in a liquid composition containing the biocide combinations.

The present invention also encompasses a method for reducing, or inhibiting, or preventing microbial growth in the use areas described above, especially in in-can preservative applications, by incorporating the claimed biocide combination into the materials.

EXAMPLES

The synergism of the biocides combination of the present invention was determined using the method described by Kull, F.C., et. al in Applied Microbiology 9:538-541 (1961).

The formula to calculate the synergy index (SI) is

$$Qa/QA + Qb/QB = SI$$

Where

QA= concentration of compound A in ppm, acting alone produced an end point (growth / no growth)
Qa = concentration of compound A in ppm, in the mixture, which produced an end point (growth / no growth)
QB= concentration of compound B in ppm, acting alone produced an end point (growth / no growth)
Qb= concentration of compound B in ppm, in the mixture, which produced an end point (growth / no growth)

In this study, biocide end point is defined as exhibiting at least 4 log bacterial or yeast reduction or maintaining a maximum 2 log bacterial or yeast count at the specified contact time. If end point could not be established, the highest concentration of biocide tested will be used as the end point for the calculation and the SI will be recorded in "less than or <" values

Synergism within two biocides is demonstrated when the SI has a value less than 1. The mixtures showed an additive effect if SI is equal to 1 and antagonistic if SI is greater than 1. The Minimum Inhibitory Test (MIC) is designed to evaluate the lowest concentration of a biocide, biocide blend or biocide combination to prevent bacteria, yeast, or fungi from growing in a defined broth. After incubation, the samples are rated based on visually detectable turbidity.

This test was carried out with a dilution factor of 1.5 for the biocides.

The following biocide products / mixtures were tested against two bacteria strains and one yeast:

**Minimum Inhibitory Concentration (MIC) testing protocol**

1. Test samples were prepared in equal volumes in transparent containers. The biocide dilutions were done in tryptic soy broth (TSB) at pH of 7.3 for the bacteria and in malt extract broth (MEB) at pH 5.4 for the fungi strain.
16 samples per biocide product and species to be tested were prepared in duplicates by serial dilution with a dilution factor of 1.5.
Per strain of micro-organism two samples not containing any biocide was added as a control.

2. Each test sample was inoculated with a microbe suspension to result in a level of $\sim$1 x $10^6$ CFU/ml in case of the bacteria species and $\sim$1 x $10^5$ CFU/ml for the fungi species respectively.

Preparation of the microbe suspensions:

Bacterial cultures:

| | | | | |
|---|---|---|---|---|
| *Pseudomonas aeruginosa* | DSM #939 | ATCC# | 15442 |
| *Staphylococcus aureus* | DSM #799 | ATCC# | 6538 |

The cultures were maintained as glycerol stocks at -80°C in cryovials, were thawed and then 100 μl spread on TSA agar plates. After incubation for 1 day at 30°C the strains were harvested with buffer pH 7.3.

The concentration of cells was assessed by using a standard viable count technique.

For the inoculum, dilutions were made in buffer pH 7.3.

Yeast culture:

| | | |
|---|---|---|
| *Candida albicans* | DSM #1386 | ATCC# 10231 |

The cultures were maintained as glycerol stocks at -80°C in cryovials, are thawed and then 100 μl spread on MEA (malt extract agar) petri dishes.

The yeast strain plates were incubated at 28°C for 1-2 days then harvested with buffer pH 5.0.

Based on total viable count results, the inoculum was prepared.

3. The incubation of test samples:

| | |
|---|---|
| Bacteria | 30°C for 2 days |
| Yeast | 28°C for 2 days |

4. Reading was done visually by a growth / no growth rating. Growth of the microorganisms leads to turbidity after the incubation, clarity indicates no growth. The lowest concentration that shows no growth in the broth after incubation is taken as the MIC value.

The results of two biocides exhibiting synergy against the bacteria and yeast are presented in Tables 1-3.

Table 1. Biocidal efficacy and synergy of Amine (N-(3-Aminopropyl)-N-dodecylpropane-1,3-diamine) and DTBMA against Pseudomonas aeruginosa DSM # 939

| Active weight ratio of Amine:DTBMA | Minimum Concentration (active ppm) to Inhibit Growth | | Synergy Index |
|---|---|---|---|
| | Amine | DTBMA | |
| Amine alone | 148 | 0 | |
| 9:1 | 27 | 3 | 0.19 |
| 3:1 | 22 | 7 | 0.18 |
| 1:1 | 15 | 15 | 0.17 |
| 1:3 | 7 | 22 | 0.15 |
| 1:10 | 4 | 40 | 0.21 |
| DTBMA alone | 0 | 222 | |

Table 2. Biocidal efficacy and synergy of Amine (N-(3-Aminopropyl)-N-dodecylpropane-1,3-diamine) and DTBMA against Staphylococcus Aureus DSM # 799

| Active weight ratio of Amine:DTBMA | Minimum Concentration (active ppm) to Inhibit Growth | | Synergy Index |
|---|---|---|---|
| | Amine | DTBMA | |
| Amine alone | 44 | 0 | |
| 9:1 | 27 | 3 | 0.74 |
| 3:1 | 10 | 3 | 0.38 |
| 1:1 | 10 | 10 | 0.73 |
| 1:3 | 3 | 10 | 0.57 |

(continued)

| Active weight ratio of Amine:DTBMA | Minimum Concentration (active ppm) to Inhibit Growth | | Synergy Index |
|---|---|---|---|
| | Amine | DTBMA | |
| 1:9 | 2 | 18 | 0.93 |
| DTBMA alone | 0 | 20 | |

Table 3. Biocidal efficacy and synergy of Amine (N-(3-Aminopropyl)-N-dodecylpropane-1,3-diamine) and DTBMA against Candida Albicans DSM #1386

| Active weight ratio of Amine:DTBMA | Minimum Concentration (active ppm) to Inhibit Growth | | Synergy Index |
|---|---|---|---|
| | Amine | DTBMA | |
| Amine alone | 148 | 0 | |
| 9:1 | 18 | 2 | 0.13 |
| 3:1 | 33 | 11 | 0.30 |
| 1:1 | 22 | 22 | 0.30 |
| 1:3 | 16 | 49 | 0.44 |
| 1:9 | 3 | 27 | 0.20 |
| DTBMA alone | 0 | 148 | |

**Claims**

1. A synergistic antimicrobial composition comprising: (a) an amine, which is N-(3-Aminopropyl)-N-dodecylpropane-1,3-diamine; and (b) dithio-2,2'-bis-benzmethylamide; wherein the weight ratio of the amine to dithio-2,2'-bis-benzmethylamide is from 10:1 to 1:10.

2. The synergistic antimicrobial composition according to claim 1 wherein the weight ratio of the amine to dithio-2,2'-bis-benzmethylamide is from 9:1 to 1:10.

3. A method of inhibiting the growth of or controlling the growth of microorganisms in an aqueous medium comprising adding to the aqueous medium the composition of claim 1.

4. The method according to claim 3 wherein the ratio of the amine to dithio-2,2'-bis-benzmethylamide in the composition is from 9:1 to 1:10.

5. An aqueous medium comprising the synergistic antimicrobial composition of claim 1.

6. The aqueous medium according to claim 5 wherein the weight ratio of the amine to dithio-2,2'-bis-benzmethylamide in the composition is from 9:1 to 1:10.

**Patentansprüche**

1. Eine synergistische antimikrobielle Zusammensetzung, beinhaltend: (a) ein Amin, das N-(3-Aminopropyl)-N-dodecylpropan-1,3-diamin ist; und (b) Dithio-2,2'-bis-benzmethylamid; wobei das Gewichtsverhältnis des Amins zu Dithio-2,2'-bis-benzmethylamid von 10 : 1 bis 1 : 10 ist.

2. Synergistische antimikrobielle Zusammensetzung gemäß Anspruch 1, wobei das Gewichtsverhältnis des Amins zu Dithio-2,2'-bis-benzmethylamid von 9 : 1 bis 1 : 10 ist.

**3.** Ein Verfahren zum Inhibieren des Wachstums oder zum Einschränken des Wachstums von Mikroorganismen in einem wässrigen Medium, beinhaltend das Zugeben der Zusammensetzung gemäß Anspruch 1 zu dem wässrigen Medium.

**4.** Verfahren gemäß Anspruch 3, wobei das Verhältnis des Amins zu Dithio-2,2'-bis-benzmethylamid in der Zusammensetzung von 9 : 1 bis 1 : 10 ist.

**5.** Ein wässriges Medium, beinhaltend die synergistische antimikrobielle Zusammensetzung gemäß Anspruch 1.

**6.** Wässriges Medium gemäß Anspruch 5, wobei das Gewichtsverhältnis des Amins zu Dithio-2,2'-bis-benzmethylamid in der Zusammensetzung von 9 : 1 bis 1 : 10 ist.

**Revendications**

**1.** Une composition antimicrobienne synergique comprenant : (a) une amine, qui est la N-(3-Aminopropyl)-N-dodécylpropane-1,3-diamine ; et (b) la dithio-2,2'-bis-benzméthylamide ; le rapport en poids de l'amine à la dithio-2,2'-bis-benzméthylamide allant de 10/1 à 1/10.

**2.** La composition antimicrobienne synergique selon la revendication 1 dans laquelle le rapport en poids de l'amine à la dithio-2,2'-bis-benzméthylamide va de 9/1 à 1/10.

**3.** Un procédé d'inhibition de la croissance ou de lutte contre la croissance de micro-organismes dans un milieu aqueux comprenant l'ajout de la composition de la revendication 1 au milieu aqueux.

**4.** Le procédé selon la revendication 3 dans lequel le rapport de l'amine à la dithio-2,2'-bis-benzméthylamide dans la composition va de 9/1 à 1/10.

**5.** Un milieu aqueux comprenant la composition antimicrobienne synergique de la revendication 1.

**6.** Le milieu aqueux selon la revendication 5 dans lequel le rapport en poids de l'amine à la dithio-2,2'-bis-benzméthylamide dans la composition va de 9/1 à 1/10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5385896 A
- GB 2354771 A
- WO 2007139950 A
- WO 2003062129 A

**Non-patent literature cited in the description**

- **KULL, F.C.** *Applied Microbiology,* 1961, vol. 9, 538-541